# EUROPEAN PATENT APPLICATION

(11) **EP 4 644 039 A1**
(43) Date of publication of application: **05.11.2025**
(21) Application number: 23911431.7
(22) Date of filing: 16.11.2023
(51) Int. Cl.: B23P 19/06, B21J 15/32, B65G 47/14

(54) **FASTENER SUPPLY DEVICE, FASTENER SUPPLY SYSTEM, AND FASTENER SUPPLY METHOD**

(30) Priority: 28.12.2022 JP 2022212021
(71) Applicant: KAWASAKI JUKOGYO KABUSHIKI KAISHA, Kobe-shi, Hyogo 650-8670 (JP)
(72) Inventor: YANO, Fuminori, Kobe-shi, Hyogo 6508670 (JP)
(74) Representative: Leinweber & Zimmermann
(86) International application number: PCT/JP2023/041228
(87) International publication number: WO 2024/142649

(57) **Abstract**

A fastener supplier 100 includes: a first conveyance path 1 that includes an outlet 32 having a first opening axis X1 and conveys a fastener F; a second conveyance path 5 that includes an inlet 51 having a second opening axis X2 different from the first opening axis X1 and conveys the fastener F from the inlet 51 to a fastening position; and a reverser 4 including a holder 41 that receives the fastener F ejected from the outlet 32 from an ejection-side end of the fastener F and holds the fastener F, and the reverser 4 supplies the fastener F to the inlet 51 with a supply-side end of the fastener F directed toward the inlet 51 along a second opening axis X2 by displacing the holder.

## Description

### FIELD

The technique disclosed here relates to a fastener supplier, a fastener supply system, and a fastener supply method.

### BACKGROUND

Patent Document 1 discloses a fastener supplier that supplies a fastener such as a screw to a fastening position. This fastener supplier conveys a fastener to the fastening position through a tube.

### CITATION LIST

### PATENT DOCUMENT

Patent Document 1: Japanese Patent No. 6673095

### SUMMARY

The fastener supplier of Patent Document 1 needs to have a tube bend radius greater than or equal to a predetermined value in order to prevent the fastener from being caught in the tube in bending the tube to change a conveyance direction. This enlarges the space occupied by the tube in the fastener supplier. As a result, the size of the fastener supplier increases.

It is therefore an object of the present disclosure to provide a fastener supplier that can be downsized to reduce installation space.

The technique disclosed here is a fastener supplier that supplies a fastener to a fastening position, and the fastener includes an ejection-side end and a supply-side end on a side opposite to the ejection-side end. The fastener supplier includes a first conveyance path, a second conveyance path, and a reverser. The first conveyance path includes an outlet having a first opening axis, and conveys the fastener. The second conveyance path includes an inlet having a second opening axis different from the first opening axis and conveys the fastener from the inlet to the fastening position. The reverser includes a holder that receives the fastener ejected from the outlet from the ejection-side end and holds the fastener, and the reverser supplies the fastener to the inlet with the supply-side end directed toward the inlet along the second opening axis by displacing the holder.

Another technique of the present disclosure is a fastener supply system. The fastener supply system includes a loader, a fastener supplier, and a replacer. The loader loads fasteners including heads and shanks into a cassette with the shanks facing downward. The fastener supplier includes a first conveyance path that includes an outlet having a first opening axis, is mounted with the cassette loaded with the fasteners by the loader, and conveys the fasteners in the cassette in a first conveyance state where the heads are oriented toward a conveyance direction, a second conveyance path that includes an inlet having a second opening axis different from the first opening axis and being open in an identical direction to the outlet, and conveys the fastener from the inlet to a fastening position, and a reverser including a holder that is located on a side toward which the outlet and the inlet are directed, and holds the fasteners ejected from the outlet in the first conveyance state, the reverser moves the fasteners to the inlet by displacing the holder within a plane orthogonal to the first opening axis and the second opening axis, and the reverser supplies the fasteners to the inlet. The replacer turns the cassette loaded with the fasteners by the loader upside down and mounts the cassette to the first conveyance path of the fastener supplier.

Another technique of the present disclosure is a fastener supply method that supplies, to a fastening position, a fastener having an ejection-side end and a supply-side end on a side opposite to the ejection-side end, to a fastening position, by using a first conveyance path including an outlet having a first opening axis and a second conveyance path including an inlet having a second opening axis different from the first opening axis. The fastener supply method includes: conveying the fastener in the first conveyance path; displacing a holder that receives the fastener ejected from the outlet from the ejection-side end and holds the fastener, to thereby supply the fastener to the inlet with the supply-side end directed toward the inlet along the second opening axis; and conveying the fastener in the second conveyance path from the inlet to the fastening position.

The fastener supplier disclosed here can reduce installation space.

The fastener supply system disclosed here can reduce installation space.

The fastener supply method disclosed here can reduce installation space.

### BRIEF DESCRIPTION OF THE DRAWINGS

[FIG. 1] FIG. 1 is a perspective view illustrating a fastener supply system.
[FIG. 2] FIG. 2 is a side view illustrating inside of a cassette immediately after fasteners are loaded.
[FIG. 3] FIG. 3 is a perspective view illustrating a fastener supplier as seen from the front.
[FIG. 4] FIG. 4 is a perspective view illustrating the fastener supplier as seen from the rear.
[FIG. 5] FIG. 5 is a cross-sectional view of the fastener supplier.
[FIG. 6] FIG. 6 is a rear view of the fastener supplier.
[FIG. 7] FIG. 7 is a view corresponding to FIG. 2 and illustrating a state where the cassette loaded with fasteners is turned upside down.
[FIG. 8] FIG. 8 is a cross-sectional view of a reverser.
[FIG. 9] FIG. 9 is a flowchart showing a fastener supply method.
[FIG. 10] FIG. 10 is a view corresponding to FIG. 8 and illustrating a state of the reverser.
[FIG. 11] FIG. 11 is a view corresponding to FIG. 8 and illustrating a state of the reverser.
[FIG. 12] FIG. 12 is a view corresponding to FIG. 8 and illustrating a state of the reverser.
[FIG. 13] FIG. 13 is a view corresponding to FIG. 8 and illustrating a state of the reverser.
[FIG. 14] FIG. 14 is a view corresponding to FIG. 8 and illustrating a state of a reverser according to a variation.
[FIG. 15] FIG. 15 is a view corresponding to FIG. 8 and illustrating a state of the reverser according to the variation.
[FIG. 16] FIG. 16 is a view corresponding to FIG. 8 and illustrating a state of the reverser according to the variation.

### DESCRIPTION OF EMBODIMENTS

An exemplary embodiment will be described in detail hereinafter with reference to the drawings.

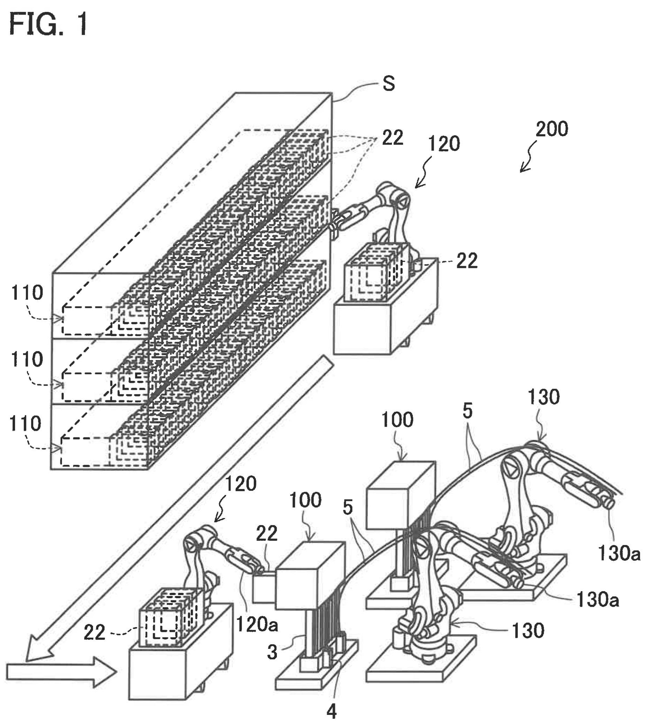

FIG. 1 is a perspective view illustrating a fastener supply system 200. The fastener supply system 200 supplies fasteners F required for assembling an aircraft, for example, to a fastening position. The fastener supply system 200 includes a loader 110, a first robot 120, a second robot 130, and a fastener supplier 100.

In the following description, the top-bottom directions coincide with the vertical directions, the front-rear directions coincide with the horizontal directions, and the left-right directions coincide with the horizontal directions and perpendicular to the front-rear directions.

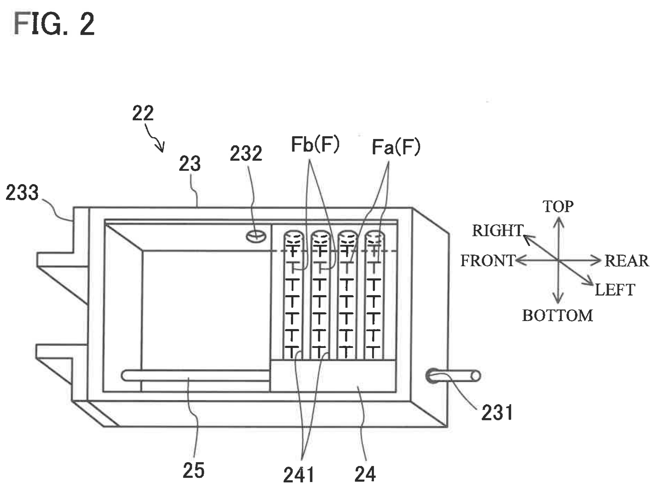

FIG. 2 is a side view illustrating inside of a cassette 22 immediately after fasteners F are loaded. The loader 110 loads fasteners F into the cassette 22 placed on a shelf S, for example. Each of the fasteners F has an ejection-side end and a supply-side end on a side opposite to the ejection-side end. In this example, each fastener F has a head Fa that is the ejection-side end and a shank Fb that is the supply-side end. The fastener F may be a screw whose shank Fb has an external thread. The fastener F may also be a rivet whose shank Fb has no external thread, for example. As illustrated in FIG. 2, the cassette 22 includes loading cylinders 241. The loader 110 loads fasteners F in a row into each of the loading cylinders 241. The loading cylinders 241 each have a cylindrical shape extending in the top-bottom directions. The loader 110 loads the fasteners F one by one into each of the loading cylinders 241 from above with the shanks Fb facing downward.

The first robot 120 replaces the cassette 22 placed in the fastener supplier 100 with a new cassette 22. Specifically, the first robot 120 takes the cassette 22 from which all the fasteners F have been ejected, out of the fastener supplier 100. Then, the first robot 120 mounts the cassette 22 loaded with fasteners F by the loader 110, to the fastener supplier 100. At this time, the first robot 120 turns the cassette 22 upside down and mounts the cassette 22 to the fastener supplier 100. The first robot 120 is an example of a replacer.

The fastener supplier 100 supplies the fasteners F loaded into the cassette 22 to a fastening position one by one. The fastening position, is, for example, a hand of the second robot 130. The second robot 130 fastens each of the fasteners F supplied from the fastener supplier 100 at a predetermined position. The second robot 130 is an example of a fastening device.

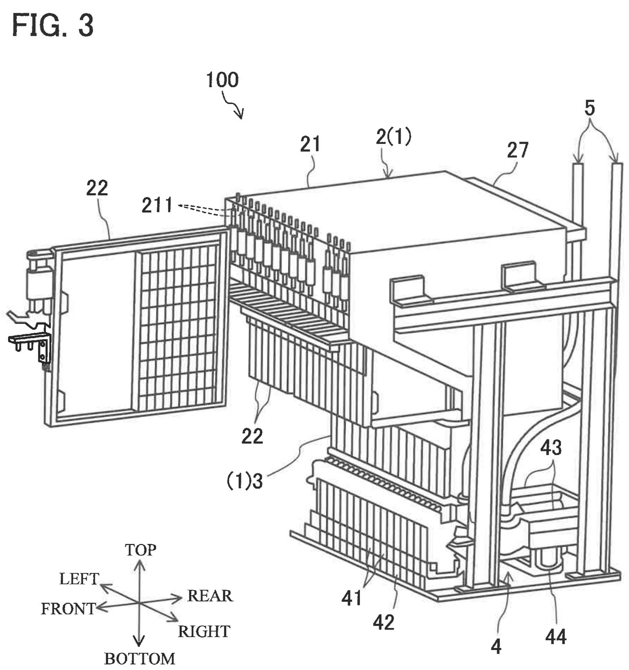

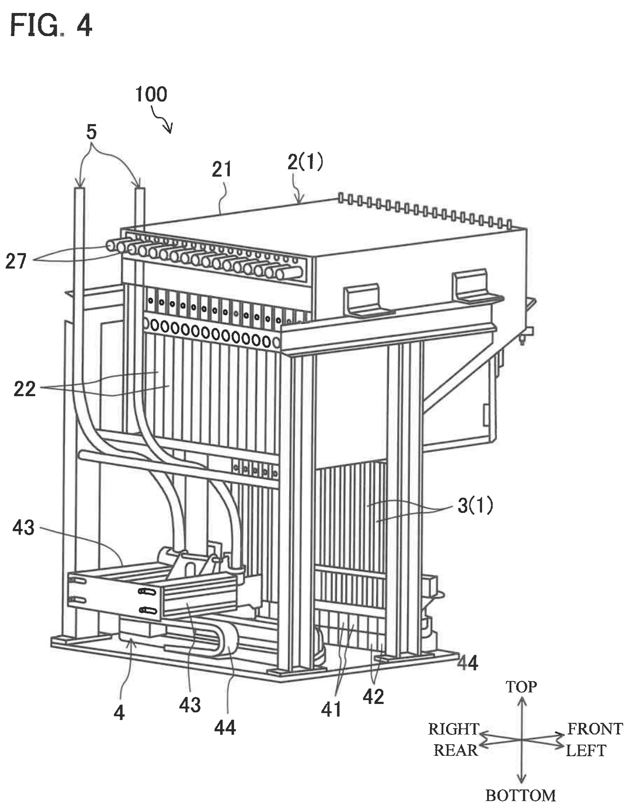

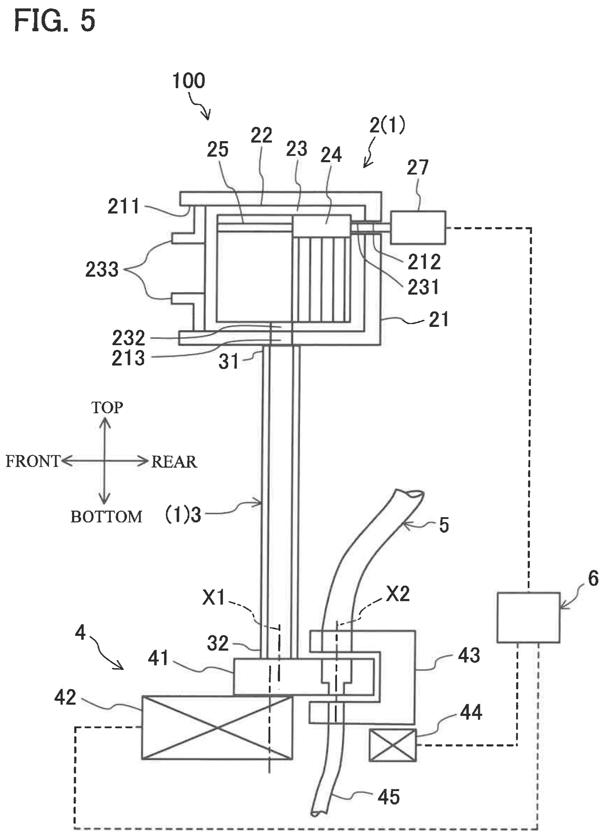

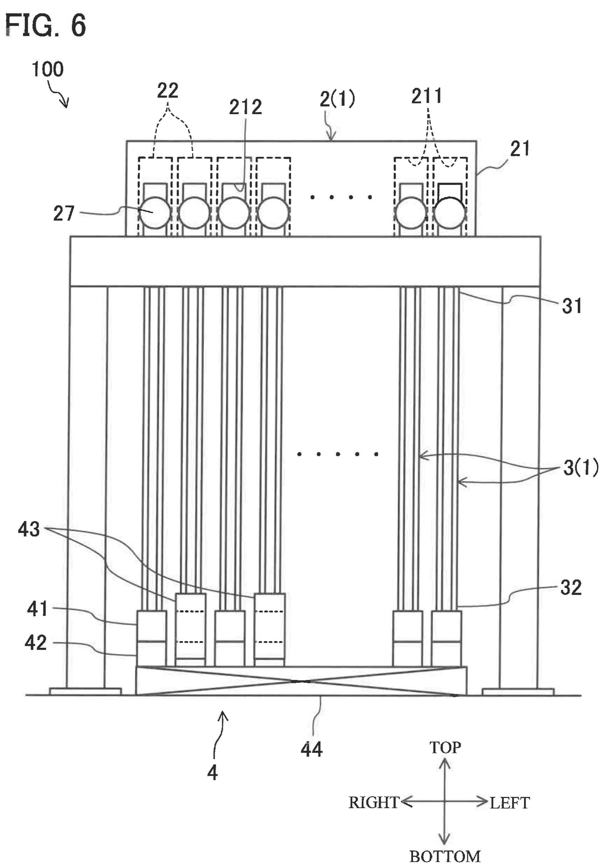

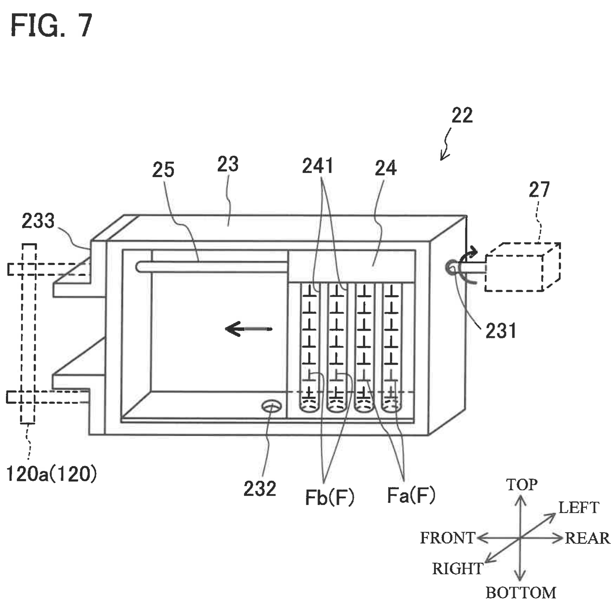

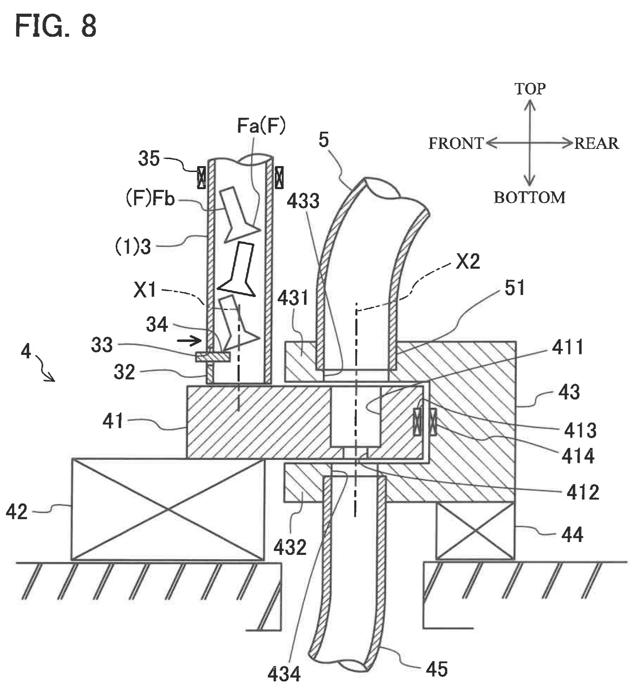

FIG. 3 is a perspective view illustrating the fastener supplier 100 as seen from the front. FIG. 4 is a perspective view illustrating the fastener supplier 100 as seen from the rear. FIG. 5 is a cross-sectional view of the fastener supplier 100. FIG. 6 is a rear view of the fastener supplier 100. FIG. 7 is a view corresponding to FIG. 2 and illustrating a state where the cassette 22 loaded with fasteners F is turned upside down. FIG. 8 is a cross-sectional view of a reverser 4.

The fastener supplier 100 includes a first conveyance path 1, the reverser 4, a second conveyance path 5, and a controller 6.

The first conveyance path 1 includes outlets 32. Each of the outlets 32 has a first opening axis X1. The fasteners F are conveyed through the first conveyance path 1. That is, the fasteners F are conveyed toward the outlets 32 of the first conveyance path 1 and ejected from the outlets 32. Specifically, the first conveyance path 1 includes a container 2 and accumulation paths 3. The container 2 houses fasteners F. The accumulation paths 3 include the outlets 32. The accumulation paths 3 temporarily accumulates fasteners F ejected from the container 2 and eject the fasteners F to holders 41 of the reverser 4 from the outlets 32.

The container 2 includes a casing 21 having slots 211, and cassettes 22. The slots 211 are arranged in the left-right directions. Each of the cassettes 22 is mounted to a corresponding one of the slots 211 by the first robot 120. As illustrated in FIG. 7, the cassettes 22 are mounted to the slots 211 while being turned upside down.

Specifically, each of the cassette 22 includes a case 23, a slider 24, and a ball screw 25. The case 23 has a substantially rectangular shape. The slider 24 is located in the case 23. The slider 24 slides in predetermined directions within the case 23. In this example, the predetermined directions are the front-rear directions. The slider 24 includes the loading cylinders 241 described above. By turning the cassette 22 upside down, the heads Fa of the fasteners F in the loading cylinders 241 face downward.

The ball screw 25 is generally located in the case 23. The ball screw 25 extends along the sliding directions of the slider 24, that is, the front-rear directions. One end of the ball screw 25 projects outward through the case 23. The ball screw 25 is engaged with the slider 24. The ball screw 25 rotates to thereby cause the slider 24 to slide in the front-rear directions. The bottom wall of the case 23 has an opening 232 from which the fasteners F are ejected. In the cassette 22, the slider 24 slides by rotation of the ball screw 25 so that one of the loading cylinders 241 thereby coincides with the opening 232. Consequently, the fasteners F in the loading cylinder 241 are ejected from the opening 232. That is, the fasteners F in the loading cylinder 241 sequentially fall from the opening 232 by self weight. The container 2 includes a motor 27. The motor 27 is coupled to the ball screw 25 and rotates the ball screw 25.

One of the side walls of the case 23 in the sliding directions of the slider 24 has an opening 231. The ball screw 25 penetrates the opening 231. The other side wall of the case 23 in the sliding directions of the slider 24 has a grip 233. The term "the other side wall in the sliding directions of the slider 24" is a side wall opposite to the side wall having the opening 231. The first robot 120 grips the grip 233 with a hand 120a and takes out the cassette 22, turns the cassette 22 upside down, and mounts the cassette 22.

As illustrated in FIG. 5, the bottom wall of the casing 21 has openings 213 from which fasteners F are ejected, at positions individually corresponding to the openings 232 of the cassettes 22. The number of the openings 213 is equal to the number of the slots 211, and the openings 213 are arranged in the left-right directions. Fasteners F in each of the loading cylinders 241 are ejected from the container 2 through the two openings 232 and 213. One of the side walls of the casing 21 in the front-rear directions has an opening 212 at a position corresponding to the opening 231 of the cassette 22, and the ball screw 25 penetrates the opening 212.

The accumulation paths 3 are made of a metal or a resin. Specifically, the accumulation paths 3 extend in the top-bottom directions. The first conveyance path 1 of this example includes multiple accumulation paths 3. The accumulation paths 3 individually correspond to the slots 211, that is, the cassettes 22. An inlet 31 of each of the accumulation paths 3 communicates with a corresponding one of the openings 213 of the casing 21. Fasteners F ejected from the openings 213 are temporarily accumulated in the accumulation paths 3. The fasteners F accumulated in the accumulation paths 3 are ejected from the outlets 32 to the holders 41 of the reverser 4. In a manner similar to the loading cylinders 241, in the accumulation paths 3, fasteners F are sequentially accumulated with the heads Fa facing downward.

In the manner described above, the fasteners F are conveyed vertically downward in the first conveyance path 1. That is, the conveyance direction of the fasteners F in the first conveyance path 1 is vertically downward. Specifically, in the loading cylinders 241 of the container 2, fasteners F fall downward by self weight. Similarly, in the accumulation paths 3, fasteners F also fall downward by self weight. Then, in first conveyance path 1, fasteners F are conveyed in a state where the heads Fa face downward, that is, a first conveyance state where the heads Fa are oriented toward the conveyance direction.

As illustrated in FIG. 8, the second conveyance path 5 includes an inlet 51 having a second opening axis X2 different from the first opening axis X1. Fasteners F are conveyed from the inlet 51 of the second conveyance path 5 to the fastening position. The second conveyance path 5 is a flexible tube. An outlet of the second conveyance path 5 is located at the fastening position, that is, the hand of the second robot 130.

Specifically, the first opening axis X1 of the outlet 32 of the first conveyance path 1 is parallel to the second opening axis X2 of the inlet 51 of the second conveyance path 5. In this example, the outlets 32 of the first conveyance path 1 are also outlets of the accumulation paths 3. The outlet 32 and the inlet 51 are open in the same direction. Specifically, the outlets 32 and the inlet 51 are open vertically downward. In other words, the first opening axis X1 and the second opening axis X2 extend in the top-bottom directions. More specifically, the outlets 32 and the inlet 51 are open substantially in a plane orthogonal to the first opening axis X1 and the second opening axis X2.

As illustrated in FIG. 8, the reverser 4 includes the holders 41. The holders 41 are located between the first conveyance path 1 and the second conveyance path 5. The holders 41 receive fasteners F ejected from the outlets 32 from the heads Fa that are the ejection-side ends, and hold the fasteners F. The reverser 4 displaces the holders 41 so that the fasteners F are thereby supplied to the inlet 51 with the shanks Fb as the supply-side ends directed toward the inlet 51 along the second opening axis X2.

Specifically, the reverser 4 includes the holders 41, first actuators 42, coupling devices 43, a second actuator 44, and an air tube 45.

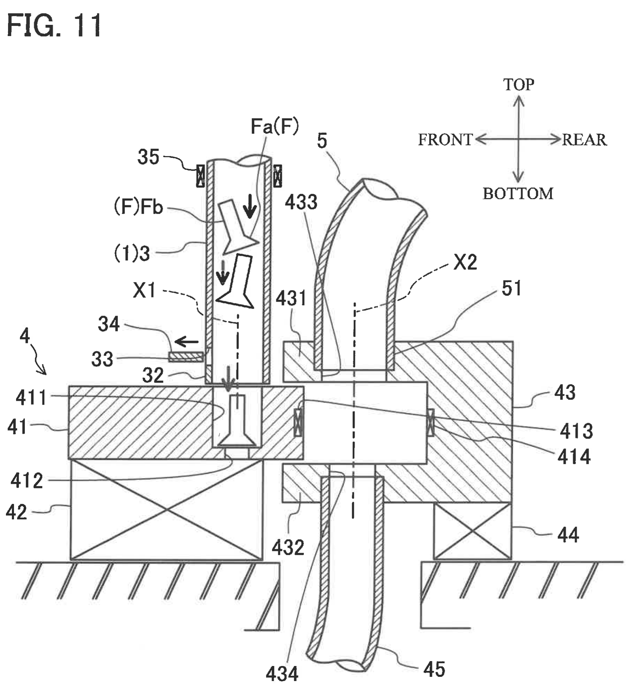

Each of the holders 41 has a substantially rectangular shape. In this example, the shape of each holder 41 is a substantially rectangle whose longitudinal directions coincide with the front-rear directions. The holders 41 are located on the side toward which the outlets 32 and the inlet 51 are directed. More specifically, the holders 41 are located vertically below the outlets 32 and the inlet 51. The holders 41 include bottomed holes 411 that hold fasteners F ejected from the outlets 32. The bottomed holes 411 are located in the upper surfaces of the holders 41. Specifically, each of the bottomed holes 411 is located close to one end of a corresponding one of the holders 41 in the front-rear directions. As illustrated in FIG. 11, the holders 41 house fasteners F ejected from the outlets 32 in the bottomed holes 411. In this manner, the holders 41 hold the fasteners F.

The holders 41 are displaced within a plane orthogonal to the first opening axis X1 and the second opening axis X2. Ther expression "within a plane orthogonal to the first opening axis X1 and the second opening axis X2" will be hereinafter also referred to as "within a horizontal plane" in some cases. More specifically, the holders 41 linearly move in the front-rear directions within the horizontal plane. The reverser 4 displaces the holders 41 within the horizontal plane to thereby move fasteners F in the bottomed holes 411 to the inlet 51. At this time, as illustrated in FIG. 11, the holders 41 are displaced while holding the fasteners F in the first conveyance state.

The holders 41 include injection outlets 412. The injection outlets 412 are located in bottom portions of the bottomed holes 411. The injection outlets 412 inject compressed air to thereby supply fasteners F to the inlet 51 and convey the fasteners F in the second conveyance path 5. The compressed air is an example of gas. The first actuators 42 linearly move the holders 41 in the front-rear directions within the horizontal plane. The first actuators 42 are, for example, cylinders. The holders 41 and the first actuators 42 individually correspond to the outlets 32 of the accumulation paths 3.

The coupling devices 43 allow the bottomed holes 411 of the holders 41 to communicate with the second conveyance path 5, and allow the injection outlets 412 of the holders 41 to communicate with the air tube 45. The coupling devices 43 are located rearward of the holders 41. Each of the coupling devices 43 includes a first plate 431 and a second plate 432. The first plate 431 and the second plate 432 are arranged in the top-bottom directions. The first plate 431 is located above the second plate 432. Each of the first plate 431 and the second plate 432 extends in the front-rear directions. The first plate 431 has a through hole 433 penetrating the first plate 431 in the top-bottom directions. The inlet 51 of the second conveyance path 5 is connected to the through hole 433. The second plate 432 has a through hole 434 penetrating the second plate 432 in the top-bottom directions. The air tube 45 is connected to the through hole 434. The air tube 45 supplies compressed air toward the injection outlets 412. In this example, as illustrated in FIG. 6, two coupling devices 43 are used.

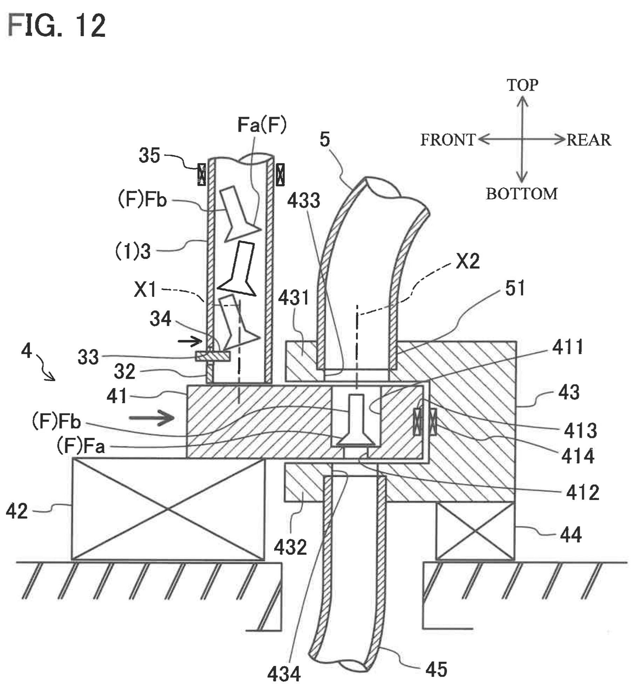

Each holder 41 linearly moves in the front-rear directions to thereby switch between a first state and a second state. In the first state, as illustrated in FIG. 11, the bottomed hole 411 is located below the outlet 32 of the accumulation path 3 and communicates with the outlet 32. In the second state, as illustrated in FIG. 8, a portion of the holder 41 near the bottomed hole 411 enters a space between the first plate 431 and the second plate 432 of the coupling device 43. That is, in the second state, the bottomed hole 411 is located below the inlet 51 of the second conveyance path 5 and communicates with the inlet 51, and the injection outlet 412 is located above the air tube 45 and communicates with the air tube 45. The holder 41 in the first state holds fasteners F in the first conveyance state. When the holder 41 switches to the second state, the fasteners F are thereby shifted to a second conveyance state. In the fasteners F in the second conveyance state, the shanks Fb that are the supply-side ends are directed toward the inlet 51 along the second opening axis X2. That is, as illustrated in FIG. 12, in the fasteners F in the second conveyance state of this example, the shanks Fb face upward.

A pair of sensors 413 and 414 is attached to the holders 41 and the coupling devices 43. The pair of sensors 413 and 414 detects that the holder 41 switches to the first state or the second state. The pair of sensors 413 and 414 is, for example, contact type sensors that detect whether the sensors are in contact with each other or not. Alternatively, the pair of sensors 413 and 414 may be laser sensors that measure a distance between the sensors. The sensors 413 and 414 may be proximity sensors attached to only one of the holder 41 or the coupling device 43.

The coupling devices 43 linearly move in the left-right directions, that is, the directions in which the holders 41 are arranged. The two coupling devices 43 are located with an interval in the left-right directions. In this example, the two coupling devices 43 linearly move as one unit in the left-right directions. The second actuator 44 causes the two coupling devices 43 to linearly move in the left-right directions. The second actuator 44 is, for example, a servo motor.

Each of the accumulation paths 3 includes a stopper 34. The stopper 34 allows fasteners F in the accumulation path 3 one by one from the outlet 32. The stopper 34 moves forward and backward in the opening 33 located near the outlet 32 of the accumulation path 3. The stopper 34 switches between a restraint state and a release state. In the restraint state, the stopper 34 enters the opening 33 and projects into the accumulation path 3. When the stopper 34 switches to the restraint state, the head Fa of a fastener F contacts the stopper 34. This stops falling of fasteners F, that is, conveyance of the fasteners F. In the release state, the stopper 34 retracts from the opening 33. When the stoppers 34 switches to the release state, restraint of the fasteners F is canceled. Accordingly, falling of the fasteners F, that is, conveyance of the fasteners F, is allowed.

The accumulation paths 3 include sensors 35 that detect that fasteners F in the accumulation path 3 run out. In this example, the sensors 35 are ring sensors that are pass-through proximity sensors. The sensors 35 may be laser sensors or color sensors.

The controller 6 performs various types of control concerning the fastener supplier 100. Specifically, the controller 6 controls the motor 27, the first actuators 42, and the second actuator 44. The controller 6 also controls movement of the stoppers 34, and supply and stop of compressed air by the air tube 45.

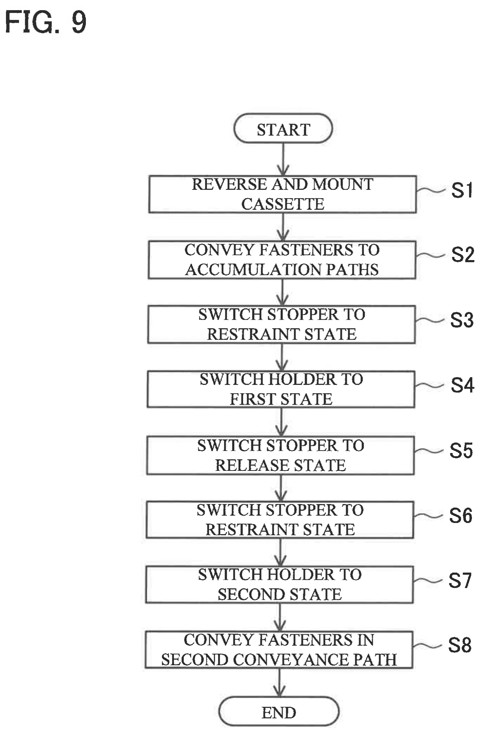

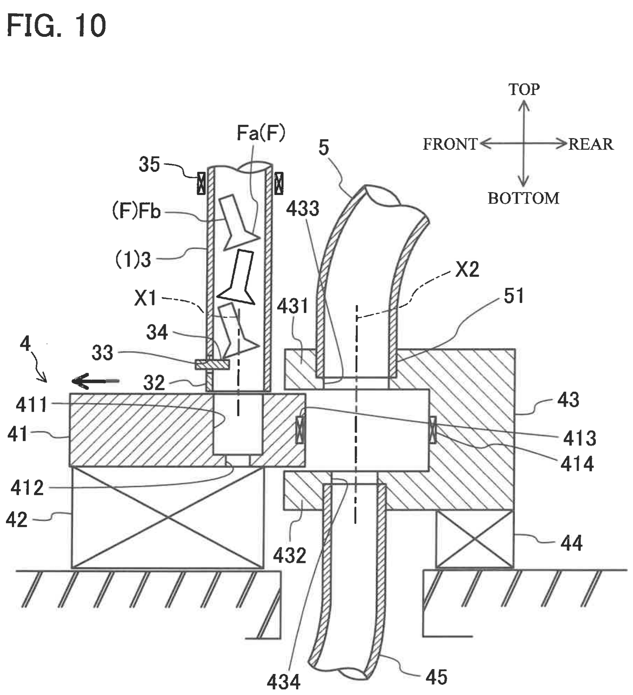

A fastener supply action of the thus-configured fastener supply system 200 will be described. FIG. 9 is a flowchart showing a fastener supply method. FIGS. 10 through 13 correspond to FIG. 8 and each illustrate a state of the reverser 4.

In step S1, the first robot 120 turns the cassette 22 upside down and mounts the cassette 22 to the slot 211 of the container 2. That is, in mounting the cassette 22 to the slot 211, the first robot 120 turns the cassette 22 loaded with fasteners F by the loader 110 upside down. Accordingly, in each cassette 22 of the container 2, the fasteners F are housed in the first conveyance state where the heads Fa of the fasteners F are oriented toward the conveyance direction.

In step S2, the container 2 conveys fasteners F in each of the accumulation paths 3. Specifically, when the ball screw 25 rotates to move the slider 24 by control of the motor 27 by the controller 6, fasteners F in the loading cylinder 241 are conveyed from the opening 213 to the accumulation path 3. In this manner, as illustrated in FIG. 8, in the accumulation path 3, fasteners F are accumulated in the first conveyance state where the heads Fa are oriented toward the conveyance direction.

In step S3, the stopper 34 switches to the restraint state. That is, the controller 6 switches the stopper 34 to the restraint state. Specifically, as illustrated in FIG. 8, the stopper 34 enters the opening 33 and projects into the accumulation path 3. This brings the head Fa of the lowermost fastener F in the accumulation path 3 into contact with the stopper 34. Accordingly, conveyance of fasteners F in the accumulation path 3 is restrained.

In step S4, the holder 41 switches to the first state. Specifically, the controller 6 drives the first actuator 42. Then, as illustrated in FIG. 10, the holder 41 is displaced to the first state. This allows the bottomed hole 411 to communicate with the outlet 32 of the accumulation path 3.

In step S5, the stopper 34 switches to the release state. That is, the controller 6 switches the stopper 34 to the release state. When the sensors 413 and 414 detect that the holder 41 has switched to the first state, the controller 6 switches the stopper 34 to the release state. Specifically, as illustrated in FIG. 11, the stopper 34 retracts from the opening 33. Then, the fasteners F restrained by the stoppers 34 fall from the outlet 32 of the accumulation path 3 to the bottomed hole 411 of the holder 41. In this manner, the holder 41 holds fasteners F ejected from the outlets 32 in the first conveyance state.

In step S6, the stopper 34 switches to the restraint state again. That is, the controller 6 switches the stopper 34 to the restraint state. Accordingly, as illustrated in FIG. 12, the stopper 34 restrains falling of the fastener F immediately above the fasteners F that have fallen on the bottomed hole 411. This can prevent two fasteners F from falling onto the bottomed hole 411 at a time.

In step S7, the holder 41 switches to the second state. Specifically, the controller 6 drives the first actuator 42. Then, as illustrated in FIG. 12, the holder 41 is displaced to the second state. Accordingly, fasteners F held by the holder 41 change to the second conveyance state. That is, the shanks Fb of the fasteners F are directed toward the inlet 51 of the second conveyance path 5 along the second opening axis X2. That is, orientation of the fasteners F changes to an upward conveyance direction. In the manner described above, the conveyance direction of the fasteners F is changed from downward to upward by displacing the holder 41 to the second state.

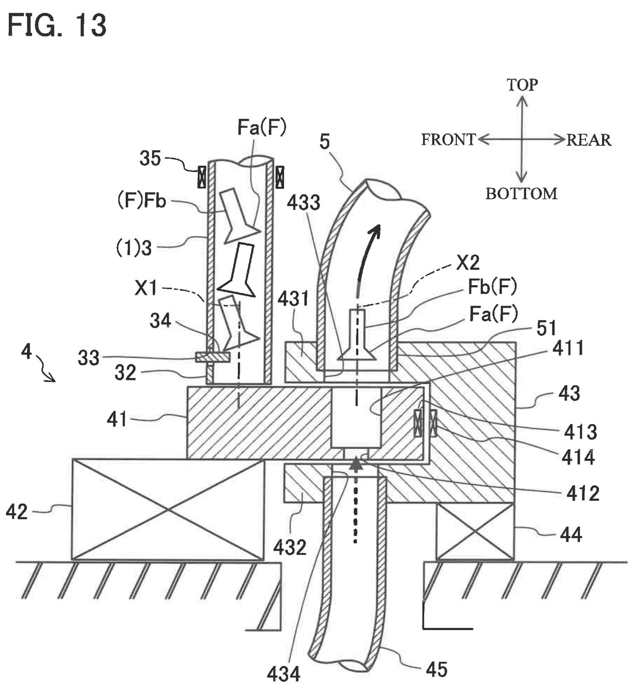

In step S8, the fasteners F in the bottomed hole 411 are conveyed in the second conveyance path 5. Specifically, as indicated by the broken allow in FIG. 13, the controller 6 causes the air tube 45 to supply compressed air toward the injection outlet 412. Accordingly, compressed air is injected from the injection outlet 412 in the upward conveyance direction. Then, under a pressure of the compressed air, the fasteners F in the bottomed hole 411 are supplied to the inlet 51 of the second conveyance path 5 and conveyed to a fastening position through the second conveyance path 5. At this time, the fasteners F are conveyed to the fastening position in the second conveyance state where the shanks Fb are oriented toward the conveyance direction. This eases fastening by the second robot 130.

In the manner described above, a supply action of supplying one fastener F to the fastening position is completed. When the supply action is completed, the process returns to step S4, and a supply action on the second fastener F starts. As long as fasteners F are present in the accumulation path 3, steps S4 through S8 are repeated. On the other hand, when the amount of fasteners F in one accumulation path 3 decreases by a predetermined amount, the sensors 35 detect this decrease, and in response to this, the cassette 22 corresponding to this accumulation path 3 is replaced by the first robot 120.

In the manner described above, in the fastener supplier 100, the reverser 4 includes the holder 41 that receives and holds fasteners F ejected from the outlet 32 of the first conveyance path 1 from the heads Fa thereof, and the holder 41 is displaced so that the fasteners F are thereby supplied to the inlet 51 with the shanks Fb directed toward the inlet 51 along the second opening axis X2. Accordingly, since fasteners F are directed toward the inlet 51 by displacing the holder 41 holding the fasteners F, the conveyance direction of the fasteners F can be changed to an acute angle. Thus, as compared to a conventional technique of changing the conveyance direction by bending a tube, for example, installation space of the second conveyance path 5 and other components can be reduced. This can reduce the size of the fastener supplier 100. Consequently, installation space of the entire fastener supply system 200 incorporating the fastener supplier 100, for example, can be reduced.

The outlet 32 of the first conveyance path 1 and the inlet 51 of the second conveyance path 5 are open in the same direction. The reverser 4 displaces the holder 41 within a plane orthogonal to the first opening axis X1 and the second opening axis X2 to thereby move fasteners F to the inlet 51. Accordingly, the orientation of the fasteners F can be changed to 180 degrees only by displacing the holder 41. Since the conveyance direction of fasteners F can be changed to an acute angle, installation space of the second conveyance path 5 and other components can be further reduced.

In addition, the outlet 32 of the first conveyance path 1 and the inlet 51 of the second conveyance path 5 are open downward. Accordingly, fasteners F fall by self weight and are conveyed in the first conveyance path 1. This eliminates power for conveying fasteners F in the first conveyance path 1.

The fasteners F are conveyed through the first conveyance path 1 in the first conveyance state where the heads Fa are oriented toward the downward conveyance direction, and the holder 41 is displaced while holding the fasteners F in the first conveyance state. Thus, by displacing the holders 41, the orientation of the fasteners F can be changed to the second conveyance state where the shanks Fb are directed toward the inlet 51 along the second opening axis X2. Accordingly, in the second conveyance path 5, the fasteners F can be conveyed with the shanks Fb oriented toward the conveyance direction. This eases fastening by the second robot 130.

The first conveyance path 1 includes the container 2 that houses fasteners F, and the accumulation paths 3 that temporarily accumulate the fasteners F ejected from the container 2 and eject the fasteners F to the holders 41 from the outlets 32. Thus, the first conveyance path 1 has the function of accumulating fasteners F.

The holders 41 include the injection outlets 412. The reverser 4 injects compressed air from the injection outlets 412 to thereby supply fasteners F to the inlet 51 and conveys the fasteners F in the second conveyance path 5. Accordingly, fasteners F can be easily conveyed in the second conveyance path 5.

In the fastener supply system 200, the cassettes 22 loaded with fasteners F by the loader 110 with the shanks Fb facing downward are turned upside down and mounted to the slots 211 of the container 2. This enables the container 2 to easily house fasteners F with the heads Fa facing downward.

### <<OTHER EMBODIMENTS>>

In the foregoing section, the embodiment has been described as an example of the technique disclosed in the present application. The technique disclosed here, however, is not limited to this embodiment, and is applicable to other embodiments obtained by changes, replacements, additions, and/or omissions as necessary. Components described in the above embodiment may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

For example, the holders 41 may be displaced by rotating the holders 41 within a horizontal plane. That is, each of the holders 41 rotates about a rotation axis orthogonal to the horizontal plane within the horizontal plane to thereby switch between the first state and the second state. In this case, in a manner similar to the embodiment described above, the conveyance direction of fasteners F can be changed to an acute angle only by displacing the holders 41 within the horizontal plane.

The outlet 32 of the first conveyance path 1 and the inlet 51 of the second conveyance path 5 may be open in the same direction, specifically, obliquely downward.

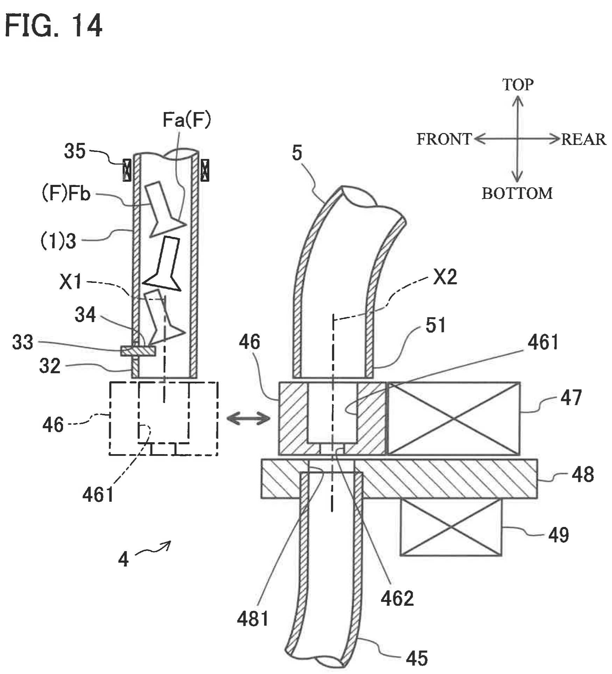

The reverser 4 may have a configuration as illustrated in FIG. 14. Specifically, the length of each holder 46 in the longitudinal directions that are the front-rear directions may be shorter than that in the embodiment. A first actuator 47 that moves the holder 46 in the front-rear directions is located rearward of the holder 46, for example. The holder 46 is switched by the first actuator 47 between a first state and a second state. Specifically, in the first state, as indicated by the chain double-dashed line in FIG. 14, a bottomed hole 461 communicates with the outlet 32 of the first conveyance path 1. In the second state, as indicated by the solid line in FIG. 14, the bottomed hole 461 communicates with the inlet 51 of the second conveyance path 5 and an injection outlet 462 communicates with the air tube 45. A coupling device 48 of this example is a plate-shaped member extending in the front-rear directions. The holder 46 and the first actuator 47 are placed on the coupling device 48. The coupling device 48 has a through hole 481 penetrating the coupling device 48 in the top-bottom directions, and the air tube 45 is connected to the through hole 481. The second actuator 49 linearly moves the coupling device 48 in the left-right directions together with the holder 46 and the first actuator 47.

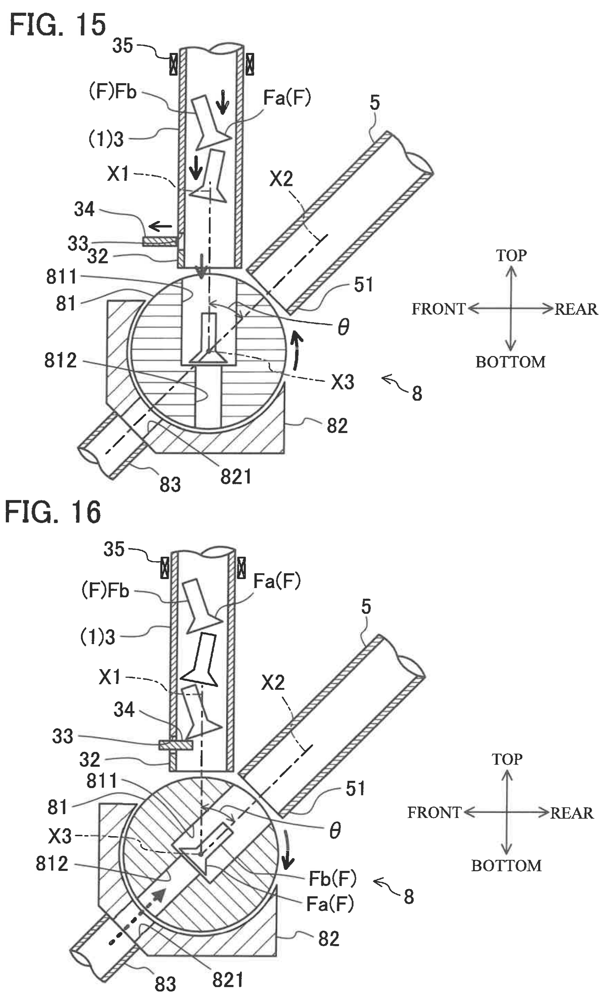

The orientation of the outlet 32 of the first conveyance path 1 may obliquely intersect with the orientation of the inlet 51 of the second conveyance path 5. That is, an angle θ formed by the first opening axis X1 and the second opening axis X2 is an acute angle, that is, 0 degrees or more and less than 90 degrees. In this case, a reverser 8 may have a configuration illustrated in FIGS. 15 and 16, for example.

Specifically, each holder 81 of this example is displaced by rotating within a plane including the first opening axis X1 and the second opening axis X2. That is, the holder 81 has a spherical shape or an approximately disc shape having a rotation axis X3 orthogonal to a plane including the first opening axis X1 and the second opening axis X2. The rotation axis X3 passes through an intersection of the first opening axis X1 and the second opening axis X2. The holder 81 rotates about the rotation axis X3. In a manner similar to the embodiment, the holder 81 includes a bottomed hole 811 and an injection outlet 812. The bottomed hole 811 is located in an outer peripheral surface of the holder 81. The injection outlet 812 is located in a bottom portion of the bottomed hole 811.

A coupling device 82 of this example rotatably supports the holder 81. The coupling device 82 is located substantially below the holder 81. The coupling device 82 includes a through hole 821 to which an air tube 83 is connected. In a manner similar to the embodiment, the coupling device 82 allows the bottomed hole 811 of the holder 81 to communicate with the second conveyance path 5, and allows the injection outlet 812 of the holder 81 to communicate with the air tube 83.

The holder 81 rotates about the rotation axis X3 to thereby switch between a first state and a second state. A rotation angle of the holder 81 at this time is equal to the angle θ. In the first state, as illustrated in FIG. 15, the bottomed hole 811 is located below the outlet 32 of the accumulation path 3 and communicates with the outlet 32. In the second state, as illustrated in FIG. 16, the bottomed hole 811 communicates with the inlet 51 of the second conveyance path 5 and the injection outlet 812 communicates with the air tube 83 through the injection outlet 812. When a stopper 34 switches to the release state, the holder 81 in the first state thereby receives fasteners F from the heads Fa and holds the fasteners F in the first conveyance state. When the holder 81 is displaced to the second state, the fasteners F held by the holder 81 changes to the second conveyance state. That is, the shanks Fb of the fasteners F are directed toward the inlet 51 of the second conveyance path 5 along the second opening axis X2. As indicated by the broken arrow in FIG. 16, when compressed air is supplied from the air tube 83 toward the injection outlet 812, fasteners F in the bottomed hole 811 are supplied to the inlet 51 and conveyed to the fastening position through the second conveyance path 5.

In the manner described above, in this example, the conveyance direction of fasteners F can also be changed to an acute angle. Accordingly, the size of the fastener supplier 100 can be reduced, and as a result, installation space of the fastener supplier 100, and further, the fastener supply system 200, can be reduced. In this example, the angle θ is not limited to an acute angle, and may be a right angle, for example.

In a case where there is no particular hindrance to fastening even when fasteners F are supplied to the fastening position with the heads Fa oriented toward the conveyance direction, the cassette 22 may not be turned upside down to be mounted to the slot 211.

The injection outlets 412 may inject a gas other than compressed air.

The techniques of the present disclosure described above are summarized as follows.
[1] A fastener supplier 100 supplies a fastener F to a fastening position, the fastener F has an ejection-side end and a supply-side end on a side opposite to the ejection-side end, and the fastener supplier 100 includes: a first conveyance path 1 that includes an outlet 32 having a first opening axis X1 and conveys the fastener F, a second conveyance path 5 that includes an inlet 51 having a second opening axis X2 different from the first opening axis X1, and conveys the fastener F from the inlet 51 to the fastening position; and a reverser 4 including a holder 41 that receives the fastener F ejected from the outlet 32 from the ejection-side end and holds the fastener F, the reverser 4 supplying the fastener F to the inlet 51 with the supply-side end directed toward the inlet 51 along the second opening axis X2 by displacing the holder 41.
   In this configuration, since the fastener F is oriented toward the inlet 51 along the second opening axis X2 by displacing the holder 41 holding the fastener F, the conveyance direction of the fastener F can be changed to an acute angle. Thus, as compared to a conventional technique of changing the conveyance direction by bending a tube, for example, installation space of the second conveyance path 5 and other components can be reduced. Accordingly, installation space of the entire fastener supplier 100 can be reduced. As a result, the fastener supplier 100 can be located as close to the second robot 130 as possible, and thus, the fastener supply system 200 can be made compact.
[2] In the fastener supplier 100 of [1], the outlet 32 and the inlet 51 are open in an identical direction, the holder 41 is located on a side toward which the outlet 32 and the inlet 51 are directed, and the reverser 4 displaces the holder 41 within a plane orthogonal to the first opening axis X1 and the second opening axis X2 and moves the fastener F to the inlet 51.
   Accordingly, the orientation of the fastener F can be changed to 180 degrees only by displacing the holder 41. Since the conveyance direction of the fastener F can be changed to an acute angle, installation space of the second conveyance path 5 and other components can be further reduced.
[3] In the fastener supplier 100 of [1] or [2], the outlet 32 and the inlet 51 are open downward, and the holder 41 is located below the outlet 32 and the inlet 51.
   In this configuration, in the first conveyance path 1, the fastener F falls by self weight to be conveyed. This eliminates power for conveying the fastener F in the first conveyance path 1.
[4] In the fastener supplier 100 of any one of [1] to [3], the ejection-side end of the fastener F is a head Fa, and the supply-side end of the fastener F is a shank Fb, the first conveyance path 1 conveys the fastener F in a first conveyance state where the head Fa is oriented toward a conveyance direction, and the holder 41 holds the fastener F in the first conveyance state.
   In this configuration, by displacing the holder 41, the fastener F can be changed to the second conveyance state where the shank Fb is oriented toward the inlet 51 along the second opening axis X2. Accordingly, in the second conveyance path 5, the fastener F can be conveyed with the shank Fb oriented toward the conveyance direction. This eases fastening by the second robot 130.
[5] In the fastener supplier 100 of any one of [1] to [4], the ejection-side end of the fastener F is a head Fa, the supply-side end of the fastener F is a shank Fb, the holder 41 is displaced to change orientation of the fastener F to a second conveyance state where the shank Fb is oriented toward a conveyance direction, and the second conveyance path 5 conveys the fastener F in the second conveyance state.
   In this configuration, by displacing the holder 41, the fastener F can be changed to the second conveyance state where the shank Fb is directed toward the inlet 51 along the second opening axis X2. Accordingly, in the second conveyance path 5, the fastener F can be conveyed with the shank Fb oriented toward the conveyance direction. This eases fastening by the second robot 130.
[6] In the fastener supplier 100 of any one of [1] to [5], the first conveyance path 1 includes a container 2 that houses the fasteners F, and an accumulation path 3 that temporarily accumulates the fasteners F ejected from the container 2 and ejects the fasteners F to the holder 41 from the outlet 32.
   In this configuration, the first conveyance path 1 can have a function of stocking the fasteners F.
[7] In the fastener supplier 100 of any one of [1] to [6], the holder 41 includes an injection outlet 412, and the reverser 4 ejects compressed air (gas) from injection outlet 412 to supply the fastener F to the inlet 51 and conveys the fastener F in the second conveyance path 5.
   In this configuration, the fastener F can be easily conveyed in the second conveyance path 5.
[8] A fastener supply system 200 includes: a loader 110 that loads fasteners F including heads Fa and shanks Fb into a cassette 22 with the shanks Fb facing downward, a fastener supplier 100 including a first conveyance path 1 that includes an outlet 32 having a first opening axis X1, is mounted with the cassette 22 loaded with the fasteners F by the loader 110 and conveys the fasteners F in the cassette 22 in a first conveyance state where the heads Fa are oriented toward a conveyance direction, a second conveyance path 5 that includes an inlet 51 having a second opening axis X2 different from the first opening axis X1 and being open in an identical direction to the outlet 32, and conveys the fasteners F from the inlet 51 to a fastening position, and a reverser 4 including a holder 41 that is located on a side toward which the outlet 32 and the inlet 51 are directed, and holds the fasteners F ejected from the outlet 32 in the first conveyance state, the reverser 4 moving the fasteners F to the inlet 51 by displacing the holder 41 within a plane orthogonal to the first opening axis X1 and the second opening axis X2, the reverser 4 supplying the fasteners F to the inlet 51; and a first robot 120, that is, a replacer, that turns the cassette 22 loaded by the loader 110 upside down and mounts the cassette 22 to the first conveyance path 1 of the fastener supplier 100.
   This configuration can reduce installation space of the fastener supplier 100, and thus, the entire fastener supply system 200 can be made compact. Further, the cassette 22 loaded with the fastener F by the loader 110 with the shank Fb facing downward is turned upside down and then mounted to the first conveyance path 1. Accordingly, even with the use of a commercially available loader 110, the first conveyance path 1 can easily house fasteners F with the heads Fa facing downward.
[9] A fastener supply method is a method for supplying, to a fastening position, a fastener F having an ejection-side end and a supply-side end on a side opposite to the ejection-side end, by using a first conveyance path 1 including an outlet 32 having a first opening axis X1 and a second conveyance path 5 including an inlet 51 having a second opening axis X2 different from the first opening axis X1, the fastener supply method includes: conveying the fastener F in the first conveyance path 1; displacing a holder 41 that receives the fastener F ejected from the outlet 32 from the ejection-side end and holds the fastener F, to supply the fastener F to the inlet 51 with the supply-side end directed toward the inlet 51 along the second opening axis X2; and conveying the fastener F in the second conveyance path 5 from the inlet 51 to the fastening position.

This configuration can reduce installation space of the second conveyance path 5 and other components. As a result, installation space of the entire fastener supplier can be reduced.

## Claims

1. A fastener supplier that supplies a fastener to a fastening position, the fastener having an ejection-side end and a supply-side end on a side opposite to the ejection-side end, the fastener supplier comprising:
a first conveyance path that includes an outlet having a first opening axis, and conveys the fastener;
a second conveyance path that includes an inlet having a second opening axis different from the first opening axis, and conveys the fastener from the inlet to the fastening position; and
a reverser including a holder that receives the fastener ejected from the outlet from the ejection-side end and holds the fastener, the reverser supplying the fastener to the inlet with the supply-side end directed toward the inlet along the second opening axis by displacing the holder.

2. The fastener supplier according to claim 1, wherein
the outlet and the inlet are open in an identical direction,
the holder is located on a side toward which the outlet and the inlet are directed, and
the reverser displaces the holder within a plane orthogonal to the first opening axis and the second opening axis and moves the fastener to the inlet.

3. The fastener supplier according to claim 2, wherein
the outlet and the inlet are open downward, and
the holder is located below the outlet and the inlet.

4. The fastener supplier according to claim 2, wherein
the ejection-side end of the fastener is a head,
the supply-side end of the fastener is a shank,
the first conveyance path conveys the fastener in a first conveyance state where the head is oriented toward a conveyance direction, and
the holder holds the fastener in the first conveyance state and is displaced.

5. The fastener supplier according to claim 2, wherein
the ejection-side end of the fastener is a head,
the supply-side end of the fastener is a shank,
the holder is displaced to change orientation of the fastener to a second conveyance state where the shank is oriented toward a conveyance direction, and
the second conveyance path conveys the fastener in the second conveyance state.

6. The fastener supplier according to claim 1, wherein
the first conveyance path includes a container that houses the fasteners, and an accumulation path that temporarily accumulates the fasteners ejected from the container and ejects the fasteners to the holder from the outlet.

7. The fastener supplier according to claim 1, wherein
the holder includes an injection outlet, and
the reverser ejects gas from the injection outlet to supply the fastener to the inlet and convey the fastener in the second conveyance path.

8. A fastener supply system comprising:
a loader that loads fasteners including heads and shanks into a cassette with the shanks facing downward;
a fastener supplier including
a first conveyance path that includes an outlet having a first opening axis, is mounted with the cassette loaded with the fasteners by the loader, and conveys the fasteners in the cassette in a first conveyance state where the heads are oriented toward a conveyance direction,
a second conveyance path that includes an inlet having a second opening axis different from the first opening axis and being open in an identical direction to the outlet, and conveys the fastener from the inlet to a fastening position, and
a reverser including a holder that is located on a side toward which the outlet and the inlet are directed, and holds the fasteners ejected from the outlet in the first conveyance state, the reverser moving the fasteners to the inlet by displacing the holder within a plane orthogonal to the first opening axis and the second opening axis, the reverser supplying the fasteners to the inlet; and
a replacer that turns the cassette loaded with the fasteners by the loader upside down and mounts the cassette to the first conveyance path of the fastener supplier.

9. A fastener supply method for supplying, to a fastening position, a fastener having an ejection-side end and a supply-side end on a side opposite to the ejection-side end, by using a first conveyance path including an outlet having a first opening axis and a second conveyance path including an inlet having a second opening axis different from the first opening axis, the fastener supply method comprising:
conveying the fastener in the first conveyance path;
displacing a holder that receives the fastener ejected from the outlet from the ejection-side end and holds the fastener, to supply the fastener to the inlet with the supply-side end directed toward the inlet along the second opening axis; and
conveying the fastener in the second conveyance path from the inlet to the fastening position.
